# EUROPEAN PATENT APPLICATION

(11) **EP 3 267 662 A1**
(43) Date of publication of application: **10.01.2018**
(21) Application number: 17177545.5
(22) Date of filing: 22.06.2017
(51) Int. Cl.: H04L 29/08, G08G 5/00

(54) **SYSTEMS AND METHODS FOR COMMUNICATING DATA FROM OFF-VEHICLE DATA SOURCES TO A VEHICLE**

(30) Priority: 06.07.2016 US 201615203436
(71) Applicant: Honeywell International Inc., Morris Plains, NJ 07950 (US)
(72) Inventor: GOLDSTEIN, David B., Morris Plains, NJ 07950 (US); NICHOLLS, James Alexander, Morris Plains, NJ 07950 (US); DUSIK, Matej, Morris Plains, NJ 07950 (US); INNOCENT, Simon, Morris Plains, NJ 07950 (US); RAJE, Anup, Morris Plains, NJ 07950 (US); NELSON, Bill, Morris Plains, NJ 07950 (US)
(74) Representative: Houghton, Mark Phillip

(57) **Abstract**

Systems and methods for communicating data from off-vehicle data sources to a vehicle are provided. In one embodiment, a method for obtaining data for a vehicle comprises: initiating an information request from on-board a vehicle; formatting the information request onboard the vehicle into a data file format to generate a request file; performing a wireless file transfer of the request file from the vehicle to a data center, wherein the request file is transferred to a file system location; polling the file system location for creation of a response file corresponding to the request file; when the response file is detected within the file system location, retrieving the response file from the data center to the vehicle; and displaying at the vehicle information responsive to the information request from the response file. In some embodiments, the file system location is a file system location uniquely associated with the vehicle.

## Description

### BACKGROUND

Unlike many vehicles of the past, many vehicles today are likely to include connectivity with off-vehicle data sources from which data may be received and provided to the vehicle operator. As this demand for data from off-vehicle data sources increases, there is a corresponding need for data communication links that can support these data transfers. Many vehicles, such as aircraft for example, have limited ability to directly and continuously connect to data sources so there is a need for optimizing the use of the limited bandwidth available to move data from the off-vehicle data sources to systems onboard the vehicle.

For the reasons stated above and for other reasons stated below which will become apparent to those skilled in the art upon reading and understanding the specification, there is a need in the art for improved systems and methods for communicating data from off-vehicle data sources to a vehicle.

### SUMMARY

The embodiments of the present disclosure provide methods and systems for communicating data from off-vehicle data sources to a vehicle and will be understood by reading and studying the following specification.

Systems and methods for communicating data from off-vehicle data sources to a vehicle are provided. In one embodiment, a method for obtaining data for a vehicle comprises: initiating an information request from on-board a vehicle; formatting the information request onboard the vehicle into a data file format to generate a request file; performing a wireless file transfer of the request file from the vehicle to a data center, wherein the request file is transferred to a file system location; polling the file system location for creation of a response file corresponding to the request file; when the response file is detected within the file system location, retrieving the response file from the data center to the vehicle; and displaying at the vehicle information responsive to the information request from the response file. In some embodiments, the file system location is a file system location uniquely associated with the vehicle.

### DRAWINGS

Embodiments of the present disclosure can be more easily understood and further advantages and uses thereof more readily apparent, when considered in view of the description of the preferred embodiments and the following figures in which:
Figure 1 is a diagram of a vehicle data delivery system of one embodiment of the present disclosure.
Figure 2 is a flow chart illustrating a process for a vehicle data delivery system of one embodiment of the present disclosure.
Figure 3 is another flow chart illustrating a process for a vehicle data delivery system of one embodiment of the present disclosure.

In accordance with common practice, the various described features are not drawn to scale but are drawn to emphasize features relevant to the present disclosure. Reference characters denote like elements throughout figures and text.

### DETAILED DESCRIPTION

In the following detailed description, reference is made to the accompanying drawings that form a part hereof, and in which is shown by way of specific illustrative embodiments. These embodiments are described in sufficient detail to enable those skilled in the art to practice the embodiments described herein, and it is to be understood that other embodiments may be utilized and that logical, mechanical and electrical changes may be made without departing from the scope of the present disclosure. The following detailed description is, therefore, not to be taken in a limiting sense.

Embodiments of the present disclosure provide for systems and methods for communicating data with a vehicle. More specifically, these embodiments utilize data files to transmit data requests and provide responses to those data request. Information requests for data by onboard systems are formatted into a data file referred to as a Request File and responses are formatted into a data file referred to as a Response File. In addition, as explained in greater detail below, data centers providing responses to Request Files utilize a file system that receives the Request Files into one or more directories. In some embodiments, the file system may receive the Request Files into subdirectories that are each uniquely associated with each of a plurality of vehicles. The data center reads the request file from a specific subdirectory and saves back into that same subdirectory a response file having information responsive to the request file.

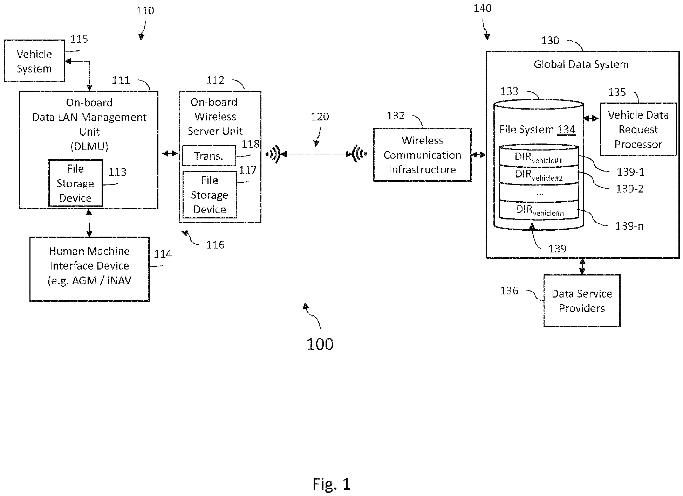

Figure 1 is a block diagram illustrating a vehicle data delivery system 100 of one embodiment of the present disclosure. System 100 comprises at least one vehicle 110 in communication with a global data system 130 via at least one wireless communication link 120. In alternate embodiments, vehicle 110 may comprise an air, ground, sea, or space vehicle. For example, in one embodiment, vehicle 100 is an airplane. Vehicle 110 includes at least one human machine interface (HMI) device 114 communicatively coupled to an on-board Data LAN Management Unit (DLMU) 111, which in turn is coupled to an on-board wireless server unit (WSU) 112. For embodiments where vehicle 110 is an aircraft, HMI device 114 may comprise avionics electronics such as but not limited to a cockpit Display Unit (DU) connected to a computer programed to generate graphics such as but not limited to an Advanced Graphic Module (AGM). In other embodiments, the HMI device 114 may comprise at least in part an Electronic Light Bag (EFB), such as a tablet computing device for example. In some embodiments, HMI device 114 further implements an integrated navigation (iNAV) system, providing charts and navigation information to the vehicle 110 pilot. DMLU 111 comprises part of an on-board data network 116 for vehicle 110 that communicatively couples the HMI device 114 to one or more other vehicle systems 115 and the WSU 112. In some embodiments, DMLU may comprise a network switch such as an Ethernet switch that propagates data packets between devices coupled to network 116. As shown in Figure 1, DLMU 111 further comprises at least one file storage device 113 which comprises a non-transient computer readable data storage medium. On-board wireless server unit 112 comprises at least one wireless transceiver 118 that supports wireless communications with other vehicle and/or ground stations. On-board wireless server unit 112 includes such processing and radio communications electronics to implements one or more wireless protocol data links such as but not limited to satellite communication (SATCOM) data links, cellular communication data links, IEEE 802.11 (e.g. Wi-Fi) data links, or other wireless technologies. As shown in Figure 1, WSU 112 also comprises at least one file storage device 117 which comprises a non-transient computer readable data storage medium.

In system 100, global data system 130 is a server that functions to fulfill data requests entered by an operator of vehicle 110 via the HMI device 114. Global data system 130 may be located at data center 140. For example, data center 140 in one embodiment may comprise a ground station computing facility. As shown in Figure 1, global data system 130 is coupled to a wireless communication infrastructure 132 (that may also be located at least in part at data center 140) which comprises a least one wireless transceiver as well as processing and radio communications electronics that implement one or more wireless protocol data links 120 that establish communication with the WSU 112 of vehicle 110. Data links 120 may comprise direct links between vehicle 110 and wireless communication infrastructure 132, or may comprise a series of links connected via one or more intervening communications devices.

Global data system 130 comprises a file storage device 133 coupled to a vehicle data request processor 135. When data request is received from an aircraft 110 (as described in greater detail below, vehicle data request processor 135 parses the data request to identify the information requested and performs one or more queries to obtain the information requested. In alternate embodiments, vehicle data request processor 135 retrieves data to respond to at least part of a data requests from sources internal to the global data system 130 such as but not limited to the file storage device 133, and/or one or more external data service providers 136 in communication with the global data system 130. For example, where the data request comprises a request for weather data pertaining to the region around a specified airport, the vehicle data request processor 135 may parse the data request to define a specific query for the weather information, and then send the query to a weather data service provider from the external data service providers 136 to obtain the requested weather information.

As mentioned above, with embodiments of the present disclosure, data requests initiated by a user onboard vehicle 110 and responses to those data requests returned by global data system 130, are both transported over data link 120 in the form of a data file. In one embodiment, the operator of vehicle enters a request for data or a data update via the HMI 114. For example, the request may comprise a request for a weather information update for one or more points along a planned travel path (for example, an aircraft's planned flight path) or other specific point. In one embodiment, HMI 114 may display a map of the planned travel path and the operator selects a point along the path for which a weather information update is requested. In one aircraft embodiment, vehicle systems 115 includes a flight management system (FMS) for the aircraft so that the HMI 114 may retrieve the current planned flight path from the FMS and display at least some portion of the planned flight path so that the operator may enter a requests pertaining to a particular point along the flight path. Similarly, for a ground vehicle, the request may comprise a request for a traffic information for one or more points along a planned travel path.

Regardless of the type of information being requested, the HMI device 114 captures the request and generates a data file that includes the contents of the request. This file, referred to henceforth as the "Request File", is then transferred to the file storage device 113 of the DLMU 111. The Request File is then pushed to the global data system 130 via the WSU 112 over wireless data link 120. In one embodiment, WSU 112 monitors the file storage device 113 of DLMU 111, and when a new Request File become present on the file storage device 113, the WSU 112 initiates a transfer of the Request File to the File System 134 of the global data system 130. For example, in one embodiment, WSU 112 periodically polls file storage device 113 to monitor for the creation of a new Response File. In another embodiment, DLMU 111 itself monitors the file storage device 113 and when a new Request File become present on the file storage device 113m DLMU 111 instructs WSU 112 to initiate a transfer of the Request File to the File System 134 of the global data system 130. In one implementation, WSU 112 also comprises a file storage device 117 so that the Request File is first transferred from the DLMU 111 to file storage device 117 before transmission to File System 134.

In some embodiment, File System 134 may be structured to include at least one directory designated to receive Request Files from vehicles that request data from data system 130. When WSU 112 performs the transfer of the Request File to the file system 134 of the global data system 130, the Request File is transferred from vehicle 110 to that directory. When the vehicle data request processor 135 detects the presence of the Request File in the subdirectory it parses the Request File to generate one or more queries to retrieve and compile the information requested in the Request File. Once the requested information is compiled, a Response File is generated by the vehicle data request processor 135 and saved into the directory into which the Request File was transferred.

In other embodiments, File System 134 may be structured to include a plurality of specific locations within File System 134 (represented in Figure 1 by subdirectories 139-1 to 139-n which are referred to collectively as subdirectories 139) each exclusively for receiving Request Files from one specific vehicle. Each vehicle authorized to interact with global data system 130 is thus assigned a specific one of the subdirectors 139-1 to 139-n within the structure of file system 134 that is associated exclusively with that respective vehicle. As such, when WSU 112 performs the transfer of the Request File to the file system 134 of the global data system 130, the Request File is transferred from vehicle 110 to a specific subdirectory (for example subdirector 139-1) associated uniquely with vehicle 110. When the vehicle data request processor 135 detects the presence of the Request File in subdirectory 139-1, it associates the Request File with vehicle 110 and in this way may be informed that the request for information embodied within the Request File originated from vehicle 110. It should be appreciated that in some embodiments, the Request File may also include embedded information that may be used by vehicle data request processor 135 to associates the Request File with vehicle 110. Vehicle data request processor 135 parses the Request File, as previously described, to generate one or more queries to retrieve and compile the information requested in the Request File. Once the requested information is compiled, a Response File is generated by the vehicle data request processor 135 and saved into the same one of the subdirectories 139 into which the Request File was transferred. In this case where the Request File was transferred by vehicle 110 into subdirectory 139-1, the Response File containing the requested information is saved by vehicle data request processor 135 into subdirectory 139-1.

Onboard vehicle 110, the WSU 112 monitors subdirectory 139-1 for creation of a Response File in response to the Request File transferred into subdirectory 139-1. For example, in one embodiment, WSU 112 polls file system 134 by sending periodic directory listing requests for subdirectory 139-1 (for example, every 5 minutes). When WSU 112 detects that a Response File has been saved into subdirectory 139-1, WSU 112 initiates a transfer of that Response File from subdirectory 139-1 to the file storage device 114 of DLMU 111. In one implementation, when Vehicle Data Request Processor 135 saves the Response File into subdirectory 139-1, it replaces the Request File with the Response File. In other embodiments, the Response File is saved into subdirectory 139-1 leaving the Request File intact until the Response File is successfully uploaded to vehicle 110. In some implementations, the WSU 112 initiates deletion of one or both of the Request File and the Response File after successful transfer of the Response file to vehicle 110. In some embodiments WSU 112 first transfers the Response File from subdirectory 139-1 into WSU 112's file storage device 117 prior to then transferring the Response File to the file storage device 113 of DLMU 111. The requesting on-board system then reads the response file and presents the information to the requesting vehicle operator. For example, HMI 114 retrieves the Response File from the DLMU 111 and parses the Response File to extract and display the information provided in response to the data request entered into HMI 114. For example, the Response File may include data used by HMI 114 to display high fidelity weather maps on HMI 114.

The Request File and/or the Response File may be formatted, for example, as a delimited flat file or alternatively as a file having a structured schema, for example, such as an Extensible Markup Language XML file. Further, transfer of these files to and from subdirectory 139-1 may utilize one or more standard file transfer protocols and incorporate error detecting and/or error correction codes to mitigate data corruption. Because the download of Requests Files and upload of Response Files is controlled by the onboard WSU 112, wireless bandwidth is not unnecessarily utilized for receiving unsolicited information. Utilization of the data file format for requests and responses also avoids the overhead bandwidth requirements needed for other data transfer techniques such as data streaming. Data assurance and data security are also enhanced because the on-board WSU 112 only accepts the upload of a Response File from the one specific subdirectory 139 associated with vehicle 110. Further, system 110 only sends and receives data upon request and only for the specific area of interest. A solution of this type significantly reduces the amount of information which has to be transmitted over datalink 120. In addition, depending on the data being transferred, a data request and response files can be queued in a file storage device during times when data connectivity is unavailable and/or higher priority data is being transferred. When data connectivity becomes available, the Request File can then be transferred to the subdirectory 139 or the Response File pulled from subdirectory 139 at the discretion of the on-board WSU 112.

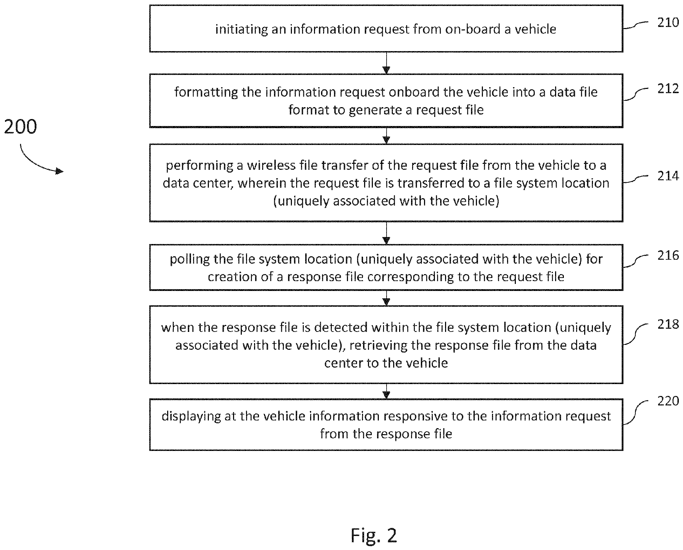

Figure 2 is a flow chart illustrating a method 200 of one embodiment of the present disclosure for communicating data with a vehicle. It should be understood that method 200 may be implemented in conjunction with any of the various embodiments and implementations described in this disclosure above or below. As such, elements of method 200 may be used in conjunction with, in combination with, or substituted for elements of those embodiments. Further, the functions, structures and other description of elements for such embodiments described herein may apply to like named elements of method 200 and *vice versa.*

The method begins at 210 with initiating an information request from on-board a vehicle and to 212 with formatting the information request onboard the vehicle into a data file format to generate a request file. As mentioned above, the vehicle may comprise any form of land, air, sea or space craft. The information request may be initiated by an operator onboard the vehicle using a human-machine interface. The human-machine interface may comprise one or more display units together with graphics modules comprising electronics for displaying information graphically to a user of the human-machine interface, and accepting inputs form the user via the human-machine interface. In one embodiment, the human-machine interface may comprise, for example, a tablet or other mobile computing electronics. The information requested may include any type of information, such as but not limited to weather and traffic data. In one embodiment, the operator of the vehicle may indicate that the information request is to be initiated upon the vehicle reaching a certain position along a predefined vehicle path. For example, the operator may enter a request for a weather data (or some other data) update once the vehicle reached a specified position (or some other condition). The request file may remain queue until such time as the position (or other condition) is met before the process proceeds to 214. This ensures that the response data will not be stale at the time the vehicle reaches a position where the response data would otherwise become relevant.

At 214, the method proceeds with performing a wireless file transfer of the request file from the vehicle to a global data system, wherein the request file is transferred to a file system location. The file system location may be, but is not necessarily, a subdirectory in the file system that is uniquely associated with the vehicle. Alternatively, the file system location may be a directory used to receive request files from other aircraft and each request file is tagged uniquely so that it may be associated with a specific aircraft.

In one embodiment, the request file is temporarily stored on-board the vehicle on one or more non-transient computer readable storage mediums (such as but not limited to a hard-drive device or a flash memory device). In one embodiment, the Request File is transferred from the vehicle to a specific subdirectory associated uniquely with the vehicle. This is, the file storage at the global data system is structured with a file system that includes a plurality of specific locations (referred to herein as subdirectories) each receiving request files exclusively from one specific vehicle. Each vehicle authorized to interact with the global data system is thus assigned a specific one of the subdirectories within the structure of the file system that is associated exclusively with that respective vehicle. As such, when method 200 performs the transfer of the request file to the global data system 130, the request file is transferred to a specific subdirectory associated uniquely with the vehicle.

As discussed above, the global data system includes processing electronics (such as the Vehicle Data Request Processor) that responds to the presence of the request file by retrieving the information requested in the request file and storing that information back into the file system location uniquely associated with the vehicle in the form of a response file. Accordingly, method proceeds to 216 with polling the file system location (which may optionally be uniquely associated with the vehicle) for creation of a response file corresponding to the request file. This may be accomplished, for example, by periodically polling the file system location to detect when a response file become available. The method then proceeds to 218 where when the response file is detected within the file system location (which may optionally be uniquely associated with the vehicle), retrieving the response file from the ground data center to the vehicle and proceeds to 220 with displaying at the vehicle information responsive to the information request from the response file.

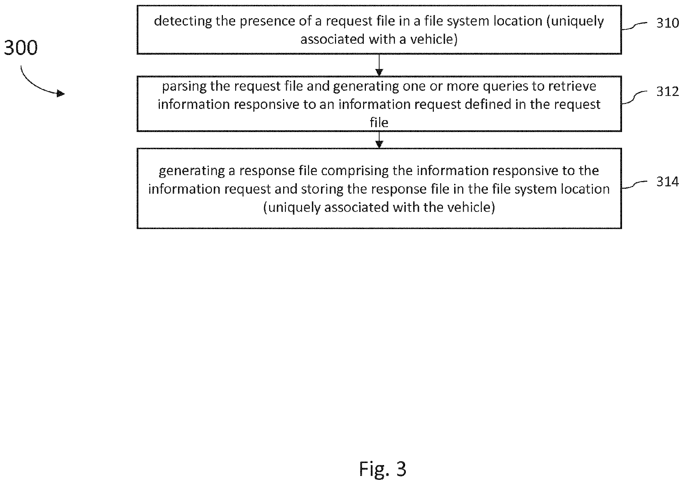

Figure 3 is a flow chart illustrating another method 300 of one embodiment of the present disclosure for communicating data with a vehicle. It should be understood that method 300 may be implemented in conjunction with any of the various embodiments and implementations described in this disclosure above or below. As such, elements of method 300 may be used in conjunction with, in combination with, or substituted for elements of those embodiments. Further, the functions, structures and other description of elements for such embodiments described herein may apply to like named elements of method 300 and *vice versa.* In particular, method 300 illustrates a process that may be performed by the global data system of method 200 between blocks 214 and 216. The method begins at 310 with detecting the presence of a request file in a file system location. That file system location may optionally be a subdirectory within the file system uniquely associated with a vehicle. The method proceeds to 312 with parsing the request file and generating one or more queries to retrieve information responsive to an information request defined in the request file. The method proceeds to 314 with generating a response file comprising the information responsive to the information request and storing the response file in the file system. As mentioned above, the file system location may optionally be a subdirectory within the file system uniquely associated with the vehicle.

### Example Embodiments

Example 1 includes a vehicle data delivery system, the system comprising: a human machine interface device; at least one file storage device coupled to the human machine interface device; and a wireless server unit comprising at least one wireless transceiver coupled to the at least one file storage device, wherein the human machine interface device, the at least one file storage device and the wireless server unit are each onboard a first vehicle; wherein the human machine interface outputs to the at least one file storage device a Request File based on at least one information request entered into the human machine interface device by a user, wherein the Request File is stored on the at least one file storage device in a data file format; wherein the wireless server unit establishes a wireless data link with a data system located at a data center and transfers the Request File to a first directory within the data system; wherein when the wireless server unit detects in the first directory the creation of a Response File associated with the Request File, the wireless server unit transfers the Response File via the wireless data link to the at least one file storage device; wherein the human machine interface device reads the Response File from the at least one file storage device and displays information responsive to the at least one information request based on the Response File.

Example 2 includes the system of example 1, further comprising: a data LAN management unit coupled to the human machine interface device and the wireless server unit, wherein the at least one file storage device is located within the a data LAN management unit; wherein the data LAN management unit further comprises a network switch that transports data packets between the human machine interface, the wireless server unit, and one or more vehicle systems.

Example 3 includes the system of example 2, wherein the first vehicle is an aircraft and the one or more vehicle systems includes a flight management system, wherein the information requests entered into the human machine interface is correlated with a position on a planned flight path.

Example 4 includes the system of example 3, wherein the human machine interface device generates the Request File when the vehicle reaches a position on the planned flight path.

Example 5 includes the system of any of examples 1-4, wherein the Request File comprises a request for weather information or traffic information.

Example 6 includes the system of any of examples 1-5, wherein the first vehicle comprises one of: an ground vehicle, an aircraft, a water craft, or a space craft.

Example 7 includes the system of any of examples 1-6, wherein the wireless server unit periodically polls the first directory to detect creation of the Response File.

Example 8 includes the system of any of examples 1-7, wherein the wireless server unit periodically polls the at least one file storage device to detect creation of the Request File by the human machine interface device.

Example 9 includes the system of any of examples 1-8, wherein the data system comprises: a file system comprising a plurality of subdirectories, wherein each respective subdirectory is exclusively associated with one specific vehicle, and wherein the first directory comprises one of the plurality of subdirectories of the file system.

Example 10 includes the system of any of examples 1-9, wherein the data system further comprises a vehicle data request processor coupled to a file system that includes the first directory, wherein the vehicle data request processor parses the Request File to identify the at least one information request and performs one or more queries to obtain information responsive to the at least one information request; wherein the vehicle data request processor generates the Response File based on the information responsive to the at least one information request and stores the Response File into the first directory within the data system.

Example 11 includes a method for obtaining data for a vehicle, the method comprising: initiating an information request from on-board a vehicle; formatting the information request onboard the vehicle into a data file format to generate a request file; performing a wireless file transfer of the request file from the vehicle to a data center, wherein the request file is transferred to a file system location; polling the file system location for creation of a response file corresponding to the request file; when the response file is detected within the file system location, retrieving the response file from the data center to the vehicle; and displaying at the vehicle information responsive to the information request from the response file.

Example 12 includes the method of example 11, wherein the file system location is a file system location uniquely associated with the vehicle.

Example 13 includes the method of any of examples 11-12, wherein the vehicle is an aircraft and the method further comprises: retrieving a planned flight path from a flight management system onboard the aircraft, wherein the information request is correlated with a position on a planned flight path.

Example 14 includes the method of example 13, further comprising generating the request file when the vehicle reaches a position on the planned flight path.

Example 15 includes the method of any of examples 11-14, wherein the request file comprises a request for weather information or traffic information.

Example 16 includes the method of any of examples 11-15, wherein initiating an information request further comprises: initiating the information request from the vehicle via a human-machine interface device on-board the vehicle.

Example 17 includes the method of examples 16, further comprising: storing the request file on a data LAN management unit coupled to the human machine interface and the wireless server unit, wherein the at least one file storage device is located within the a data LAN management unit; wherein the data LAN management unit further comprises a network switch that transports data packets between the human machine interface device, the wireless server unit, and one or more vehicle systems.

Example 18 includes a method for providing data to a vehicle, the method comprising: detecting the presence of a request file in a file system location; parsing the request file and generating one or more queries to retrieve information responsive to an information request defined in the request file; and generating a response file comprising the information responsive to the information request and storing the response file in the file system location.

Example 19 includes the method of example 18, wherein the request file comprises a request for weather information or traffic information.

Example 20 includes the method of any of examples 18-19, wherein the file system location is a file system location uniquely associated with the vehicle.

In various alternative embodiments, system elements, method steps, or examples described throughout this disclosure (such as the DLMU, HMI, WSU, wireless communications Infrastructure, vehicle data request processor, global data center, or subparts thereof, for example) may be implemented using one or more computer systems, field programmable gate arrays (FPGAs), or similar devices comprising a processor coupled to a memory and executing code to realize those elements, processes, or examples, said code stored on a non-transient data storage device. Therefore other embodiments of the present disclosure may include elements comprising program instructions resident on computer readable media which when implemented by such computer systems, enable them to implement the embodiments described herein. As used herein, the term "computer readable media" refers to tangible memory storage devices having non-transient physical forms. Such non-transient physical forms may include computer memory devices, such as but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device having a physical, tangible form. Program instructions include, but are not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present disclosure. Therefore, it is manifestly intended that the embodiments of this disclosure be limited only by the claims and the equivalents thereof.

## Claims

1. A vehicle data delivery system, the system comprising:
a human machine interface device (114);
at least one file storage device (113, 117) coupled to the human machine interface device (114); and
a wireless server unit (112) comprising at least one wireless transceiver coupled to the at least one file storage device (113, 117), wherein the human machine interface device (114), the at least one file storage device (113, 117) and the wireless server unit (112) are each onboard a first vehicle (110);
wherein the human machine interface outputs to the at least one file storage device (113, 117) a Request File based on at least one information request entered into the human machine interface device (114) by a user, wherein the Request File is stored on the at least one file storage device (113, 117) in a data file format;
wherein the wireless server unit (112) establishes a wireless data link (120) with a data system (130) located at a data center (140) and transfers the Request File to a first directory (139) within the data system (130);
wherein when the wireless server unit (112) detects in the first directory (139) the creation of a Response File associated with the Request File, the wireless server unit (112) transfers the Response File via the wireless data link (120) to the at least one file storage device (113, 117);
wherein the human machine interface device (114) reads the Response File from the at least one file storage device (113, 117) and displays information responsive to the at least one information request based on the Response File.

2. The system of claim 1, wherein the human machine interface device (114) generates the Request File when the vehicle reaches a position on a planned flight path.

3. The system of claim 1, wherein the wireless server unit (112) periodically polls the first directory (139) to detect creation of the Response File.

4. The system of claim 1, wherein the data system (130) comprises:
a file system comprising a plurality of subdirectories (139-1 to 139-n),
wherein each respective subdirectory is exclusively associated with one specific vehicle, and wherein the first directory (139) comprises one of the plurality of subdirectories of the file system.

5. The system of claim 1, wherein the data system (130) further comprises a vehicle data request processor (135) coupled to a file system (134) that includes the first directory (139), wherein the vehicle data request processor (135) parses the Request File to identify the at least one information request and performs one or more queries to obtain information responsive to the at least one information request;
wherein the vehicle data request processor (135) generates the Response File based on the information responsive to the at least one information request and stores the Response File into the first directory (139) within the data system (130).

6. A method for obtaining data for a vehicle, the method comprising:
initiating an information request from on-board a vehicle (110) (210);
formatting the information request onboard the vehicle into a data file format to generate a request file (212);
performing a wireless file transfer of the request file from the vehicle to a data center (140), wherein the request file is transferred to a file system location (134)(214);
polling the file system location (134) for creation of a response file corresponding to the request file (216);
when the response file is detected within the file system location (134), retrieving the response file from the data center (140) to the vehicle (110)(218); and
displaying at the vehicle (110) information responsive to the information request from the response file (220).

7. The method of claim 6, wherein the file system location (134) is a file system location (139-1 to 139-n) uniquely associated with the vehicle (110).

8. The method of method of claim 6, wherein the vehicle (110) is an aircraft and the method further comprises
retrieving a planned flight path from a flight management system onboard the aircraft, wherein the information request is correlated with a position on a planned flight path.

9. The method of claim 7, further comprising generating the request file when the vehicle (110) reaches a position on the planned flight path.

10. The method of claim 6, wherein initiating an information request further comprises:
initiating the information request from the vehicle via a human-machine interface device (114) on-board the vehicle (110).
